# EUROPEAN PATENT SPECIFICATION

(11) **EP 4 070 947 B1**
(45) Date of publication and mention of the grant of the patent: **27.11.2024**
(21) Application number: 20896677.0
(22) Date of filing: 01.12.2020
(51) Int. Cl.: D04H 1/4291, D04H 1/435, D04H 1/485, D04H 1/541, B32B 5/02, B32B 5/26, B32B 7/12, B32B 15/14, B32B 15/18, B32B 15/20

(54) **MOLDED BODY, SANDWICH PANEL USING SAME AND METHOD FOR MANUFACTURING SAME**
FORMKÖRPER, SANDWICHPLATTE DAMIT UND VERFAHREN ZU DEREN HERSTELLUNG
CORPS MOULÉ, PANNEAU SANDWICH L'UTILISANT ET SON PROCÉDÉ DE FABRICATION

(30) Priority: 02.12.2019 KR 20190158127; 17.11.2020 KR 20200153860
(43) Date of publication of application: 12.10.2022
(73) Proprietor: LX Hausys, Ltd., Seoul 04637 (KR)
(72) Inventor: HAN, Kyungseok, Seoul 07796 (KR); AHN, Seunghyun, Seoul 07796 (KR); LIM, Jiwon, Seoul 07796 (KR); LIM, Sung Chan, Seoul 07796 (KR); LEE, Myung, Seoul 07796 (KR); KIM, Heejune, Seoul 07796 (KR)
(74) Representative: Goddar, Heinz J.
(86) International application number: PCT/KR2020/017397
(87) International publication number: WO 2021/112535

(56) References cited:
- WO-A1-02/066246
- JP-A- S63 233 830
- KR-A- 20070 006 931
- KR-A- 20080 010 392
- KR-A- 20120 109 802
- KR-A- 20190 104 791

## Description

### [Technical Field]

The present invention relates to a molded body, a sandwich panel using the same, and a method for manufacturing the same.

### [Background Art]

A typical sandwich panel has structural rigidity similar to that of a metal panel and is effective in reducing weight, and thus, has been used in various fields such as construction materials.

In such a sandwich panel, a core layer (molded body) is formed between skin layers formed of aluminum, iron, etc. to control the physical properties of the panel. For example, for the core layer, a foamed resin material is used to increase a weight reduction effect of the panel, or a general resin, a composite or a balsa wood material is used to increase the mechanical strength of the panel.

However, such a sandwich panel does not have sufficient weight reduction and mechanical strength, and is not excellent in elongation, so that there are limitations in product application. In addition, when the panel is formed by applying an adhesive between the skin layer and the core layer, there is a problem in that the formability during processing is poor because the bonding force between the layers is weak.

As the background art related to the present invention, there is Korean Laid-open Patent Publication No. 10-2017-0140111, which discloses a sandwich panel and a manufacturing method thereof.

However, in the case of the sandwich panel, physical properties such as high density, high flexural strength and tensile strength, and the like were secured, but in the case of mixing and using a polypropylene fiber serving as a binder in a process of manufacturing non-woven fiber aggregates with a polyester-based fiber, there is a problem in that compatibility with the polyester-based fiber is lowered, and thus, the mechanical properties are deteriorated.

US Patent Application 2019/0105877 discloses a sandwich panel including a core layer which comprises a thermally bonded, thermoformed needlefelt comprising PET fibers and PET bicomponent binder fibers.

JPS 63/233830 discloses a sandwich panel comprising a core layer in the form of a nonwoven which can be hot-pressed, comprising a blend of crystalline polymer fibers with fibers comprising a polyethylene-polypropylene block copolymer modified with maleic anhydride.

### [Prior Art]

### [Patent Documents]

(Patent Document 1) Korean Laid-open Patent Publication No. 10-2017-0140111, Sandwich panel and manufacturing method thereof
(Patent Document 2) US Patent Application 2019/0105877, Sandwich panel and a manufacturing method thereof.
(Patent Document 3) JP Patent Application 63/233830

### [Disclosure]

### [Technical Problem]

In order to solve the problems, the present inventors studied a molded body, a sandwich panel using the same, and a method for manufacturing the same, wherein the molded body was manufactured by mixing a polyester-based fiber; and a polypropylene composite fiber including maleic anhydride polyolefin when manufacturing a non-woven fabric (non-woven fiber aggregates) used as a core material of the sandwich panel, and completed the present invention.

Therefore, an object of the present invention is to provide a sandwich panel and a method for manufacturing the same having excellent mechanical properties of flexural rigidity and flexural strength even without adding a separate additional binder, by using a molded body as a core layer, which is manufactured by a polypropylene composite fiber having excellent compatibility with a polyester-based fiber and including maleic anhydride polyolefin used as a binder, when the sandwich panel is manufactured.

### [Technical Solution]

According to a first aspect of the present invention, there is provided a molded body having a non-woven fiber aggregate structure comprising two or more non-woven fiber aggregates, including a polyester-based fiber and a polypropylene composite fiber, wherein the polypropylene composite fiber includes polypropylene; and maleic anhydride polyolefin.

The maleic anhydride polyolefin is grafted with polyolefin and maleic anhydride, wherein the polyolefin is polypropylene having a homopolymer structure.

In an exemplary embodiment of the present invention, the non-woven fiber aggregate structure may include 35 to 75 wt% of the polyester-based fiber and 25 to 65 wt% of the polypropylene composite fiber with respect to the total weight of the polyester-based fiber and the polypropylene composite fiber.

In an exemplary embodiment of the present invention, the non-woven fiber aggregate structure may include 35 to 75 wt% of the polyester-based fiber and 35 to 65 wt% of the polypropylene composite fiber with respect to the total weight of the polyester-based fiber and the polypropylene composite fiber.

In an exemplary embodiment of the present invention, the polyester-based fiber may be at least one selected from the group consisting of polyethylene terephthalate (PET), polytrimethylene terephthalate, polybutylene terephthalate and polyethylene naphthalate.

In an exemplary embodiment of the present invention, the non-woven fiber aggregate structure may be a structure in which two or more non-woven fiber aggregates are bonded, and the non-woven fiber aggregates may be formed by bonding non-woven fibers on a web or sheet with an adhesive or using a thermoplastic fiber.

In an exemplary embodiment of the present invention, the flexural rigidity of the molded body may be 0.55 to 1.05 GPa.

In an exemplary embodiment of the present invention, the flexural strength of the molded body may be 60 to 135 N.

According to a second aspect of the present invention, there is provided a sandwich panel including a core layer; a skin layer laminated on at least one surface of the core layer; and a bonding layer bonding the core layer and the skin layer, wherein the core layer uses the molded body of claim 1.

In an exemplary embodiment of the present invention, the flexural rigidity of the sandwich panel may be 30 to 50 GPa.

In an exemplary embodiment of the present invention, the flexural strength of the sandwich panel may be 1500 to 3000 N.

In an exemplary embodiment of the present invention, the skin layer may be at least one selected from the group consisting of aluminum, iron, stainless steel (SUS), magnesium, electro-galvanized iron (EGI) and galvanized iron (GI).

In an exemplary embodiment of the present invention, the bonding layer may include at least one of an olefin-based adhesive, a urethane-based adhesive, an acrylic adhesive, and an epoxy-based adhesive.

According to a third aspect of the present invention, there is provided a method for manufacturing a sandwich panel according to any of claims 7 to 11 including steps of: a) preparing non-woven fiber aggregates by mixing a polyester-based fiber and a polypropylene composite fiber; b) preparing a core layer by performing a needle-punching process for the non-woven fiber aggregate at the number of times of punching per minute of 300 to 1000 times, a movement speed of 1 to 8 m/min, and a punching density of 100 to 500 punches/cm²; c) forming a bonding layer on at least one surface of the core layer; and d) forming a skin layer on the bonding layer.

### [Advantageous Effects]

According to the present invention, the molded body, the sandwich panel using the same, and the method for manufacturing the same provide an effect of improving mechanical properties such as flexural rigidity, flexural strength, and the like by mixing a polyester-based fiber and a polypropylene composite fiber including maleic anhydride polyolefin when manufacturing a non-woven fabric used as a core material to improve compatibility between fibers. The sandwich panel having the effect is suitable to be used for structural members (a TV back cover, a washing machine board, etc.) for home appliances, interior and exterior boards for construction, interior and exterior materials for automobiles, interior and exterior materials for trains/ships/aircraft, various partition boards, elevator structural members, etc.

### [Description of Drawings]

FIG. 1 is a diagram schematically illustrating a sandwich panel according to the present invention.
FIG. 2 shows an SEM image of a core layer according to Example 4 of the present invention.
FIG. 3 shows an SEM image of a core layer according to Comparative Example 2 of the present invention.

### [Best Mode]

Advantages and features of the present invention, and methods for accomplishing the same will be more clearly understood from exemplary embodiments described in detail below with reference to the accompanying drawings. However, the present invention is not limited to the following exemplary embodiments but may be implemented in various different forms. The exemplary embodiments are provided only to make description of the present invention complete and to fully provide the scope of the present invention to a person having ordinary skill in the art to which the present invention pertains with the category of the invention, and the present invention will be defined by the appended claims. Like reference numerals refer to like elements throughout the specification.

Hereinafter, a molded body and a sandwich panel according to a preferred embodiment of the present invention will be described in detail with reference to the accompanying drawings.

As an experiment result of the present inventors, in the case of a core material to be used in a conventional sandwich panel, non-woven fiber aggregates obtained by mixing a polyester-based fiber with a polypropylene fiber serving as a binder were prepared, but there is a problem in that there is a limitation to improve the mechanical properties of the core material due to the deterioration of compatibility between the two fibers, and thus, there is a need for research thereon.

In order to solve the problems, the inventors of the present invention have manufactured a sandwich panel with improved mechanical properties such as flexural strength and flexural rigidity by mixing and using a polypropylene composite fiber including maleic anhydride polyolefin with a polyester-based fiber when manufacturing a non-woven fiber aggregate structure used as a core material to improve compatibility between both the fibers.

### Molded body

The present invention provides a molded body having a non-woven fiber aggregate structure comprising two or more non-woven fiber aggregates. The molded body comprises a polyester-based fiber and a polypropylene composite fiber, wherein the polypropylene composite fiber comprises polypropylene; and maleic anhydride polyolefin.

In the present invention, the 'non-woven fiber aggregate structure' is a structure in which two or more non-woven fiber aggregates are bonded, and the 'non-woven fiber aggregate' means that non-woven fibers on a web or sheet are bonded with an adhesive or using a thermoplastic fiber. Since the molded body according to the present invention has non-woven fiber aggregates in which the fibers are entangled with each other, all or a part of the polyester-based fiber is fused by a binder, and thus, natural pores are included in the molded body, thereby improving air permeability and improving weight reduction. That is, since the molded body has the natural pores formed while the fibers are entangled with each other, unlike a case where pores are artificially formed by an additive such as a foaming agent, the molded body is a non-foaming core to reduce manufacturing costs and the foaming process may be omitted to increase the process efficiency.

The non-woven fiber aggregate structure of the molded body according to the present invention includes a polyester-based fiber. An average length of the polyester-based fiber included in the molded body according to the present invention is preferably 5 to 100 mm. When the average length of the fiber is less than 5 mm, it may be difficult to expect an effect of high elongation because the length of the fiber is short. On the contrary, when the average length of the fiber exceeds 100 mm, a space occupied by a gap of the molded body may be reduced because the content of fibers entangled with each other increases. In addition, when the average length of the fiber exceeds 100 mm, the dispersion of the fibers is not made smoothly when manufacturing the molded body, and thus, the physical properties of the molded body may be deteriorated.

The non-woven fiber aggregate structure may include 35 to 75 wt%, preferably 35 to 65 wt%, preferably 45 to 65 wt%, more preferably 45 to 55 wt% of the polyester-based fiber with respect to the total weight of the polyester-based fiber and the polypropylene composite fiber. When the polyester-based fiber is included in less than 35 wt%, there is a problem that the content of the polyester-based fiber serving as a reinforced fiber is decreased so that the mechanical properties are deteriorated. In addition, when the polyester-based fiber is included in excess of 75 wt%, there is a problem that it is difficult to control a lofting phenomenon after thermoforming, so that the formability of the board is deteriorated.

The polyester-based fiber may use at least one selected from the group consisting of polyethylene terephthalate (PET), polytrimethylene terephthalate, polybutylene terephthalate and polyethylene naphthalate.

In addition, the non-woven fiber aggregate structure may further include a sheath-core type bicomponent fiber. The sheath-core type bicomponent fiber may include a core part of the polyester-based fiber; and a sheath part that is a non-hygroscopic copolymer resin surrounding the core part. The sheath-core type bicomponent fiber may be included in the molded body because the resin of the sheath part which has been introduced in the manufacturing step of the molded body remains in a non-melted state.

The core part of the sheath-core type bicomponent fiber may use at least one selected from the group consisting of polyethylene terephthalate (PET), polytrimethylene terephthalate, polybutylene terephthalate and polyethylene naphthalate as the polyester-based fiber.

The sheath part of the sheath-core type bicomponent fiber may use the same non-hygroscopic copolymer resin as a binder which may be included in the molded body.

Specifically, the non-hygroscopic copolymer resin refers to a resin having a property of not absorbing moisture in the air, and specifically, may use a resin having less than 0.1%, preferably less than 0.08%, more preferably less than 0.07% of a weight change rate (i.e., an increase rate of moisture content) of the molded body after left for 100 hours at a temperature of 85°C and a relative humidity of 85% based on the molded body of the present invention manufactured using the resin.

Generally, since the hygroscopic degree of the PET fiber included in the molded body is less than 0.05%, the fact that the weight change rate of the molded body is more than 0.05% means that the amount of moisture to be absorbed by the binder which is another configuration in the molded boy is considerable. In this regard, the non-hygroscopic copolymer resin refers to a resin having a low absorption rate of less than 0.1%, preferably less than 0.08%, more preferably less than 0.07% of the weight change rate (that is, the increase rate of the moisture content) of the molded body after left for 100 hours at a temperature of 85°C and a relative humidity of 85% based on the finally manufactured molded body.

Such a non-hygroscopic copolymer resin is prepared by copolymerizing an ester-based resin, a diol-based monomer having strong crystallinity and excellent elasticity, and an acid component capable of imparting flexibility, and may use a resin that satisfies the absorption rate.

Specifically, the ester-based resin may use at least one selected from the group consisting of polyethylene terephthalate (PET), polytrimethylene terephthalate, polybutylene terephthalate and polyethylene naphthalate, the diol-based monomer may use at least one selected from the group consisting of neopentyl glycol, diethylene glycol, ethylene glycol, poly(tetramethylene) glycol, 1,4-butanediol, 1,3-propanediol, 1,6-hexanediol, 1,4-cyclohexanediol, and the like, and the acid component may use at least one selected from the group consisting of isophthalic acid, adipic acid, 2,6-naphthalenedicarboxylic acid, sebacic acid, succinic acid, and the like.

The sheath-core type bicomponent fiber is prepared by using, melt-spinning and drawing the components of the core part and the components of the sheath part.

In addition, when the non-hygroscopic resin is used as the sheath component of the sheath-core type bicomponent fiber, flexural strength and tensile strength are improved, and the molded body may be manufactured by a dry process to make it easy to prepare a high-density molded layer. In addition, when the non-hygroscopic resin is used as a packaging material for large cargo, it is possible to prevent sagging of the non-woven fabric due to its good physical properties and shape retention even under a high temperature and high humidity atmosphere.

The non-woven fiber aggregate structure of the molded body according to the present invention includes a polypropylene composite fiber.

In addition, the polypropylene composite fiber includes polypropylene; and maleic anhydride polyolefin. The polypropylene composite fiber may comprise 90 to 99 wt% of polypropylene and 1 to 10 wt% of maleic anhydride polyolefin based on the total weight of the polypropylene composite fiber.

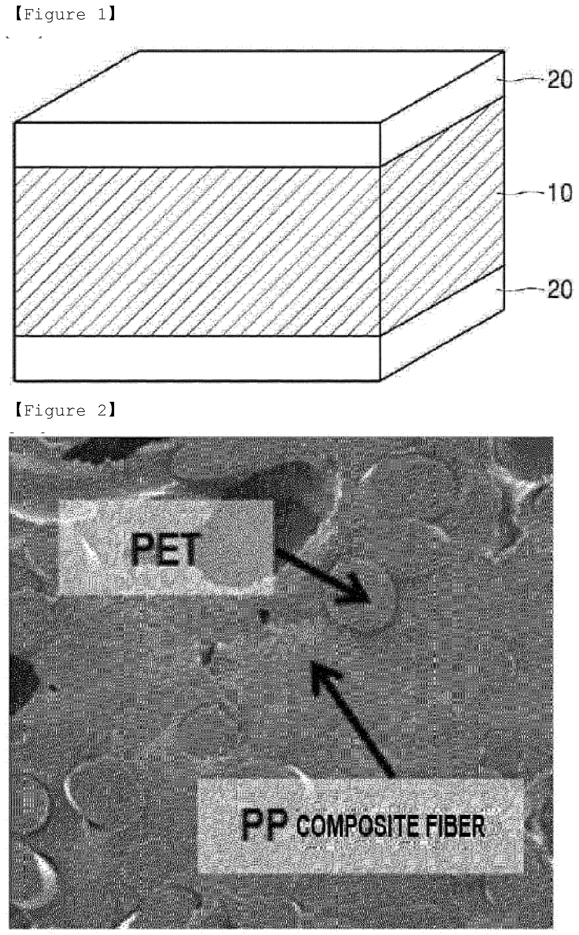

Referring to FIG. 2, the polypropylene composite fiber includes maleic anhydride polyolefin together with polypropylene to serve as a binder, thereby increasing compatibility with the polyethylene terephthalate (PET) fiber and increasing compatibility with a bonding layer when the sandwich panel is manufactured. On the other hand, referring to FIG. 3, when only polypropylene is used instead of the polypropylene composite fiber, it can be confirmed that compatibility with the polyethylene terephthalate (PET) fiber is deteriorated.

The maleic anhydride polyolefin is grafted with polyolefin and maleic anhydride. The maleic anhydride polyolefin may be prepared by grafting polyolefin and maleic anhydride in a weight ratio of 70:30 to 97:3. When the weight ratio is satisfied, there may be effect of improving mechanical properties such as flexural rigidity and flexural strength.

The polyolefin is polypropylene having a homopolymer structure. When preparing maleic anhydride polyolefin included in the polypropylene composite fiber using a homopolymer using a single type of monomer instead of a block copolymer, there is an effect of improving mechanical properties such as flexural strength and the like of the molded body by increasing the tensile strength of the fiber.

It can be confirmed that after physically separating the polypropylene composite fiber from the polyester-based fiber by heat-treating the core material of the sandwich panel at 180 to 220°C, the polymer grafted with maleic anhydride is a homopolymer through gel permeation chromatography (GPC). Specifically, when the homopolymer is used, compared to the case of using the block copolymer, as the analysis result through the GPC, characteristics exhibited in the high range of weight average molecular weight can be confirmed, and mechanical and chemical properties may be better than those of the case of using the block copolymer.

The non-woven fiber aggregate structure may include 25 to 65 wt%, preferably 35 to 65 wt%, more preferably 35 to 55 wt%, particularly more preferably 45 to 55 wt% of the polypropylene composite fiber with respect to the total weight of the polyester-based fiber and the polypropylene composite fiber. When polypropylene composite fiber is included in less than 25 wt%, there is a problem that the binding area between the fibers is reduced and thus, mechanical properties are lowered. In addition, when polypropylene composite fiber is included in excess of 65 wt%, there is a problem that the weight of the polypropylene composite fiber increases, and thus, the numerical stability during thermoforming is lowered.

The non-woven fiber aggregate structure may further include a binder. In addition, the binder may be a non-hygroscopic copolymer resin or a hygroscopic copolymer resin.

In particular, the non-hygroscopic copolymer resin refers to a resin having a property of not absorbing moisture in the air, and specifically, may use a resin having less than 0.1%, preferably less than 0.08%, more preferably less than 0.07% of a weight change rate (i.e., an increase rate of moisture content) of the molded body after left for 100 hours at a temperature of 85°C and a relative humidity of 85% based on the molded body of the present invention manufactured using the resin.

Generally, since the hygroscopic degree of the PET fiber included in the molded body is less than 0.05%, the fact that the weight change rate of the molded body is more than 0.05% means that the amount of moisture to be absorbed by the binder which is another configuration in the molded boy is considerable. In this regard, the non-hygroscopic copolymer resin refers to a resin having a low absorption rate of less than 0.1%, preferably less than 0.08%, more preferably less than 0.07% of the weight change rate (that is, the increase rate of the moisture content) of the molded body after left for 100 hours at a temperature of 85°C and a relative humidity of 85% based on the finally manufactured molded body.

Such a non-hygroscopic copolymer resin is prepared by copolymerizing an ester-based resin, a diol-based monomer having strong crystallinity and excellent elasticity, and an acid component capable of imparting flexibility, and may use a resin that satisfies the absorption rate.

Specifically, the ester-based resin may use at least one selected from the group consisting of polyethylene terephthalate (PET), polytrimethylene terephthalate, polybutylene terephthalate and polyethylene naphthalate, the diol-based monomer may use at least one selected from the group consisting of neopentyl glycol, diethylene glycol, ethylene glycol, poly(tetramethylene) glycol, 1,4-butanediol, 1,3-propanediol, 1,6-hexanediol, 1,4-cyclohexanediol, and the like, and the acid component may use at least one selected from the group consisting of isophthalic acid, adipic acid, 2,6-naphthalenedicarboxylic acid, sebacic acid, succinic acid, and the like.

All or part of the polyester-based fiber included in the molded body may be fused by a binder that is a non-hygroscopic resin, and the binder may have a melting point of 160°C or higher. In addition, the molded body having the non-woven fiber aggregate structure according to the present invention has an apparent density of 0.2 to 0.8 g/cm³. Since the density range is satisfied, the molded body may have sufficient mechanical strength to be used for a packaging material for large cargo.

The molded body according to the present invention has the flexural rigidity of 0.55 to 1.05 GPa, preferably 0.75 to 1.02 GPa, more preferably 0.85 to 0.97 GPa, and the flexural strength of 60 to 135 N, preferably 95 to 133 N, more preferably 120 to 130 N, which has excellent mechanical strength. The flexural rigidity and the flexural strength are measured according to ASTM C393.

Since the molded body according to the present invention satisfies the mechanical strength, the molded body is included in the sandwich panel as the core layer to be used for structural members (a TV back cover, a washing machine board, etc.) for home appliances, interior and exterior boards for construction, interior and exterior materials for automobiles, interior and exterior materials (boards of partitions and the like) for trains/ships/aircraft, various partition boards, elevator structural members, etc.

In addition, the molded body according to the present invention may further include a filler such as glass fiber, carbon fiber, polymer fiber, and the like. In addition, a flame retardant such as a bromine-based organic flame retardant may be further included. In addition, additives such as an impact modifier and a heat stabilizer may be further included.

### Manufacturing method of molded body

The manufacturing method of the molded body according to the present invention may be manufactured by the following method.

The manufacturing method of the molded body according to the present invention includes steps of a) preparing non-woven fiber aggregates by mixing a polyester-based fiber and a polypropylene composite fiber; and b) manufacturing a molded body (core layer) by performing a needle-punching process for the non-woven fiber aggregates at the number of times of punching per minute of 300 to 1000 times, a movement speed of 1 to 8 m/min, and a punching density of 100 to 500 punches/cm².

In step a), (A) a polyester-based fiber and (B) a polypropylene composite fiber are prepared, respectively, and then mixed to prepare non-woven fiber aggregates. At this time, the (A) polyester-based fiber; and the (B) polypropylene composite fiber may be mixed and used in a weight ratio of 35:65 to 75:25, preferably 35:65 to 65:35, more preferably 45:55 to 65:35, particularly more preferably 45:55 to 55:45. When the weight ratio of the (A) polyester-based fiber and the (B) polypropylene composite fiber does not satisfy the range, there is a problem that the compatibility between fibers is lowered due to the lack of a binder, and thus, the flexural rigidity and flexural strength of the molded body and the sandwich panel including the same are lowered.

Before mixing the polyester-based fiber and the polypropylene composite fiber, polypropylene and maleic anhydride polyolefin may be prepared in order to prepare the polypropylene composite fiber.

Specifically, first, maleic anhydride polyolefin (chip) may be prepared by grafting polyolefin which is a homopolymer and maleic anhydride in a weight ratio of 70:30 to 97:3. Thereafter, polypropylene (chip) and the maleic anhydride polyolefin (chip) may be mixed in a weight ratio of 90:10 to 99:1 to spin the polypropylene composite fiber.

The weight average molecular weight (Mw) when the polypropylene (chip) and the maleic anhydride polyolefin (chip) are compounded for bonding may be 190,000 to 230,000. In the case of less than the weight average molecular weight, it may be difficult to spin the polypropylene composite fiber prepared using the compounded polypropylene (chip) and maleic anhydride polyolefin (chip). In addition, in the case of more than the weight average molecular weight, since a melt index (M.I) is lowered, the graft ratio of polyolefin is lowered, thereby deteriorating compatibility.

The polyester-based fiber may use at least one selected from the group consisting of polyethylene terephthalate (PET), polytrimethylene terephthalate, polybutylene terephthalate and polyethylene naphthalate, and the polyolefin may include a monomer selected from the group consisting of ethylene, propylene, and combinations thereof.

Thereafter, in step b), the molded body having the non-woven fiber aggregate structure may be manufactured by performing a needle-punching process of the non-woven fiber aggregate at the number of times of punching per minute of 300 to 1000 times, a movement speed of 1 to 8 m/min, and a punching density of 100 to 500 punches/cm².

The needle-punching process may be performed for the mixed non-woven fiber aggregates at the number of times of punching per minute of 300 to 1000 times, a movement speed of the non-woven fiber aggregates of 1 to 8 m/min, and a punching density of 100 to 500 punches/cm². More preferably, the needle-punching process may be performed for the non-woven fiber aggregates at the number of times of punching per minute of 400 to 700 times, a movement speed of the non-woven fiber aggregates of 1.5 to 6 m/min, and a punching density of 200 to 400 punches/cm².

If the number of times of punching per minute is less than 300, there is a problem that the binding degree between the non-woven fiber aggregates is lowered, and when the number of times of punching per minute is more than 1000 times, there is a problem that the breakage of the non-woven fiber aggregates occurs. Further, when the movement speed of the non-woven fiber aggregates is slower than 1 m/min, there is a problem that the production speed is too slow, and when the movement speed is faster than 8 m/min, there is a problem that it is not easy to control the punching density. If the punching density is less than 100 punches/cm², there is a problem that the binding degree between the non-woven fiber aggregates is lowered, and when the punching density is more than 500 punches/cm², there is a problem that the breakage of the non-woven fiber aggregates occurs.

The needle punching process may be performed two or more times. When the needle punching process is performed two or more times, it is possible to increase the binding force of the interlayer fibers, which is effective in preventing delamination.

When the needle punching process is performed in the range, the physical bonding force by needle punching is improved, and physical properties such as tensile strength of the molded body used as a core layer are improved, and as a result, the shear rigidity strength and the sagging degree of the finally manufactured sandwich panel may be improved.

Specifically, after mixing the polyester-based fiber and the polypropylene composite fiber, carding is performed using a carding machine, and then the needle punching process is performed under the conditions to prepare non-woven fiber aggregates (non-woven fabric) having a basis weight of 3000 to 4000 gsm.

Thereafter, the prepared non-woven fiber aggregates (non-woven fabric) are mounted on a plurality of unwinding devices, and then moved to a hot press. At this time, 1 to 10 sheets of the prepared non-woven fiber aggregates may be mounted on the plurality of unwinding devices according to the number, and then moved to the hot press for manufacturing the molded body. As such, when the plurality of non-woven fiber aggregates are used by using the plurality of unwinding devices, since the thickness of each non-woven fiber aggregate becomes thin, the length of the non-woven fiber aggregate to be wound on one unwinding device is increased. Accordingly, there is an advantage that the process may be simplified because it is possible to reduce the number of times of use of a joining machine for connecting the non-woven fiber aggregates continuously input during a continuous process.

Thereafter, the plurality of non-woven fiber aggregates (non-woven fabric) moved to the hot press are heated and pressed under a temperature condition of 200 to 210°C and a pressure condition of 100 to 200 kgf/cm² to manufacture a molded body having a non-woven fiber aggregate structure.

The hot press is not particularly limited as long as the hot press is commonly used in the art, and as a specific example, a double belt press, a heating roll press, etc. may be used.

In addition, the manufacturing method of the molded body according to the present invention
may further include preheating for 3 to 10 minutes at a temperature condition of 190 to 210°C after performing the needle punching process of step b).

### Sandwich panel

Referring to FIG. 1, the sandwich panel according to the present invention includes a core layer 10; a skin layer 20 laminated on at least one surface of the core layer; and a bonding layer (not illustrated) for bonding the core layer and the skin layer, wherein the core layer uses the molded body.

The core layer of the sandwich panel according to the present invention is constituted by the molded body according to the present invention described above. The thickness of the core layer is preferably 0.1 to 10 mm. When the thickness is less than 0.1 mm, there is a problem that it is difficult to maintain excellent mechanical strength, and when the thickness exceeds 10 mm, there is a problem that the formability is deteriorated during bending or deep drawing molding of the sandwich panel.

The sandwich panel according to the present invention includes a skin layer laminated on at least one surface of the core layer.

The skin layer of the sandwich panel according to the present invention may be formed of a metal material, and preferably, may include at least one selected from the group of aluminum, iron, stainless steel (SUS), magnesium, electro-galvanized iron (EGI) and galvanized iron (GI). For example, in order to have excellent formability and flexural rigidity, a skin layer including EGI may be applied to the sandwich panel. In addition, in order to reduce the weight, a skin layer including aluminum may be applied to the sandwich panel.

The thickness of the skin layer may be 6% or less of the thickness of the entire panel. The skin layer of the conventional sandwich panel had a problem in that since the mechanical strength of the core material is lowered, the thickness of the skin layer needs to be thick, and as a result, the weight of the sandwich panel is increased. In the sandwich panel according to the present invention, as the mechanical strength of the core material is improved, the thickness of the skin layer may be 6% or less of the thickness of the entire panel, and thus, the weight may be reduced.

The sandwich panel according to the present invention includes the bonding layer for bonding the core layer and the skin layer.

The bonding layer of the sandwich panel according to the present invention is applied between the core layer and the skin layer to bond the core layer and the skin layer. The bonding layer is preferably applied with a uniform thickness in consideration of the viscosity. In the present invention, the sandwich panel may be manufactured by laminating the core layer and the skin layer and then curing the layers, or the sandwich panel may be manufactured by laminating the core layer and the skin layer and then hot-pressing the layers. In this case, as the adhesive penetrates into the core layer during curing or hot-pressing, there is an effect of improving the bonding force between the skin layer and the core layer by mechanical bonding as well as chemical bonding with the components constituting the core layer. The chemical bonding means that the adhesive is bonded with an upper surface and a lower surface of the core layer through a covalent bond, a hydrogen bond, a van der Waals bond, an ionic bond, and the like.

The mechanical bonding refers to a form in which rings are physically hung as if the rings are hung with each other while the adhesive permeates into the core layer. This form is also called mechanical interlocking. Due to natural pores included in the core layer, the adhesive permeates into the upper and lower surfaces of the core layer.

The adhesive constituting the bonding layer may include at least one of an olefin-based adhesive, a urethane-based adhesive, an acrylic adhesive, and an epoxy-based adhesive. The olefin-based adhesive may be at least one selected from the group consisting of polyethylene, polypropylene, and amorphous polyalphaolefin adhesives. The urethane-based adhesive may be used without limitation as long as the adhesive is adhesives including a urethane structure (-NH-COO-). The acrylic adhesive may include at least one of a polymethyl methacrylate adhesive, a hydroxyl group-containing polyacrylate adhesive, and a carboxy group-containing polyacrylate adhesive. The epoxy-based adhesive may include at least one of a bisphenol-A type epoxy adhesive, a bisphenol-F type epoxy adhesive, a novolac epoxy adhesive, linear aliphatic epoxy resins, and cycloaliphatic epoxy resins.

In addition, the adhesive may include a photocurable adhesive, a hot-melt adhesive, or a thermosetting adhesive, and any one of a photocuring method and a thermal-curing method may be used. For example, the sandwich panel may be manufactured by thermal-curing a laminate including the skin layer, the core layer, and the adhesive. The thermal curing may be performed for about 5 minutes to 2 hours at a curing temperature of the epoxy resin of 50 to 110°C, and the curing may be performed for about 1 to 10 hours even at room temperature.

The bonding layer may be applied at a thickness of about 20 to 300 µm, but is not limited thereto.

As the method of applying the bonding layer to one surface of the skin layer, any one method selected from a die coating method, a gravure coating method, a knife coating method, and a spray coating method may be used.

Another adhesive used for the bonding layer may include a first bonding layer including high-density polyethylene (HDPE) and a second bonding layer including low-density polyethylene (LDPE) .

The HDPE may have a density of 0.940 to 0.965 g/cm³, and the LDPE may have a density of 0.910 to 0.925 g/cm³.

The adhesive constituting the bonding layer is not particularly limited as long as the adhesive may form the first bonding layer including HDPE and the second bonding layer including LDPE, but preferably prepared by co-extrusion using a film extruder.

The bonding layer may be applied at a thickness of about 20 to 300 µm, and the first bonding layer and the second bonding layer may each have a thickness of 10 to 150 µm, but is not limited thereto, and the thicknesses of the first bonding layer and the second bonding layer may be the same as or different from each other.

In order to form the skin layer on the bonding layer, the skin layer is positioned on the bonding layer, and then a laminate including the skin layer, the core layer, and the adhesive is hot-pressed to manufacture the sandwich panel. The hot-pressing may be performed at a pressure of 2 to 10 MPa at 150 to 200°C for about 3 to 10 minutes.

At this time, the core layer and the HDPE adhesive are attached to each other, and the skin layer and the LDPE adhesive are attached to each other. As such, the LDPE adhesive is used for the skin layer to be attached easily even with relatively low heat, and for the core layer, the HDPE adhesive is used to prevent an adhesive melted by heat from fully permeating into the core so as not to exhibit the bonding force, thereby improving the bonding force between the respective components.

The sandwich panel to which the non-woven fiber aggregate structure of the molded body is applied may have flexural rigidity of 30 to 50 GPa and flexural strength of 1500 to 3000 N. The flexural rigidity and the flexural strength are measured according to ASTM C393.

### Manufacturing method of sandwich panel

The sandwich panel according to the present invention is formed by sequentially laminating the skin layer 20, the core layer 10, and the skin layer 20, and manufactured by applying a bonding layer between the core layer 10 and the skin layer 20. After the components are laminated, the curing and pressing steps may be performed, but the present invention is not limited thereto.

Specifically, the method for manufacturing the sandwich panel according to the present invention comprises the steps of:
a) preparing non-woven fiber aggregates by mixing a polyester-based fiber and a polypropylene composite fiber; b) preparing a core layer by performing a needle-punching process for the non-woven fiber aggregates at the number of times of punching per minute of 300 to 1000 times, a movement speed of 1 to 8 m/min, and a punching density of 100 to 500 punches/cm²; c) forming a bonding layer on at least one surface of the core layer; and d) forming a skin layer on the bonding layer.

The core layer of the sandwich panel according to the present invention is constituted by the molded body according to the present invention described above. Accordingly, steps a) and b) are the same as those of the manufacturing method of the molded body described above.

Thereafter, in step c), the bonding layer may be formed on at least one surface of the core layer.

The adhesive constituting the bonding layer may include at least one of an olefin-based adhesive, a urethane-based adhesive, an acrylic adhesive, and an epoxy-based adhesive. The olefin-based adhesive may be at least one selected from the group consisting of polyethylene, polypropylene, and amorphous polyalphaolefin adhesives. The urethane-based adhesive may be used without limitation as long as the adhesive is adhesives including a urethane structure (-NH-COO-). The acrylic adhesive may include at least one of a polymethyl methacrylate adhesive, a hydroxyl group-containing polyacrylate adhesive, and a carboxy group-containing polyacrylate adhesive. The epoxy-based adhesive may include at least one of a bisphenol-A type epoxy adhesive, a bisphenol-F type epoxy adhesive, a novolac epoxy adhesive, linear aliphatic epoxy resins, and cycloaliphatic epoxy resins.

In addition, the adhesive may include a photocurable adhesive, a hot-melt adhesive, or a thermosetting adhesive, and any one of a photo-curing method and a thermal-curing method may be used. For example, the sandwich panel may be manufactured by thermal-curing a laminate including the skin layer, the core layer, and the adhesive. The thermal curing may be performed for about 5 minutes to 2 hours at a curing temperature of the epoxy resin of 50 to 110°C, and the curing may be performed for about 1 to 10 hours even at room temperature.

The bonding layer may be applied at a thickness of about 20 to 300 µm, but is not limited thereto.

As the method of applying the bonding layer to one surface of the skin layer, any one method selected from a die coating method, a gravure coating method, a knife coating method, and a spray coating method may be used.

Another adhesive used for the bonding layer may include a first bonding layer including high-density polyethylene (HDPE) and a second bonding layer including low-density polyethylene (LDPE) .

The HDPE may have a density of 0.940 to 0.965 g/cm³, and the LDPE may have a density of 0.910 to 0.925 g/cm³.

The adhesive constituting the bonding layer is not particularly limited as long as the adhesive may form the first bonding layer including HDPE and the second bonding layer including LDPE, but preferably prepared by co-extrusion using a film extruder.

The bonding layer may be formed at a thickness of about 20 to 300 µm, and the first bonding layer and the second bonding layer may each have a thickness of 10 to 150 µm, but is not limited thereto, and the thicknesses of the first bonding layer and the second bonding layer may be the same as or different from each other.

Thereafter, in step d), the skin layer may be formed on the bonding layer.

The skin layer of the sandwich panel according to the present invention may be formed of a metal material, and preferably, may include at least one selected from the group of aluminum, iron, stainless steel (SUS), magnesium, electro-galvanized iron (EGI) and galvanized iron (GI). For example, in order to have excellent formability and flexural rigidity, a skin layer including EGI may be applied to the sandwich panel. In addition, in order to reduce the weight, a skin layer including aluminum may be applied to the sandwich panel.

In order to form the skin layer on the bonding layer, any one of a photo-curing method, a thermal-curing method, and a hot-pressing method may be used. For example, the sandwich panel may be manufactured by thermal-curing or hot-pressing a laminate including the skin layer, the core layer, and the adhesive.

The thermal curing may be performed for about 5 minutes to 2 hours at a curing temperature of the epoxy resin of 50 to 110°C, and the curing may be performed for about 1 to 10 hours even at room temperature.

In the hot-pressing, in the case of using the adhesive including the first bonding layer containing the HDPE and the second bonding layer containing the LDPE, the skin layer is positioned on the bonding layer and then the laminate including the skin layer, the core layer, and the adhesive is hot-pressed to manufacture the sandwich panel. The hot-pressing may be performed at a pressure of 2 to 10 MPa at 150 to 200°C for about 3 to 10 minutes.

At this time, the core layer and the HDPE adhesive are attached to each other, and the skin layer and the LDPE adhesive are attached to each other. As such, the LDPE adhesive is used for the skin layer to be attached easily even with relatively low heat, and for the core layer, the HDPE adhesive is used to prevent an adhesive melted by heat from fully permeating into the core so as not to exhibit the bonding force, thereby improving the bonding force between the respective components.

As described above, the sandwich panel according to the present invention has excellent formability as well as mechanical strength by using the core layer which is lightweight and has good mechanical properties. Specifically, the sandwich panel using the core layer (molded body) having the non-woven fiber aggregate structure may have flexural rigidity of 30 to 50 GPa and flexural strength of 1500 to 3000 N.

In addition, problems such as the shear rigidity, the sagging degree, and the bonding force between different fibers of the sandwich panel are improved, so that the sandwich panel is suitable to be used for structural members (a TV back cover, a washing machine board, etc.) for home appliances, interior and exterior boards for construction, interior and exterior materials for automobiles, interior and exterior materials (boards of partitions and the like) for trains/ships/aircraft, various partition boards, elevator structural members, etc.

Hereinafter, preferred Examples will be provided to help in understanding of the present invention. However, the following Examples are just illustrative of the present invention, and it will be apparent to those skilled in the art that various changes and modifications can be made within the scope and the technical idea of the present invention and it is natural that these variations and modifications are within the scope of the appended claims.

### Examples: Manufacture of sandwich panel

### Preparation of core layer (molded body): Preparation Examples 1 to 12

### [Preparation Example 1]

After a polypropylene chip (PolyMirae) and a maleic anhydride polypropylene chip (Hyundai EP) were prepared, the chips were mixed in a weight ratio of 95:5 to spin a polypropylene composite fiber (fineness of 15 deniers). The maleic anhydride polypropylene chip was formed by grafting polypropylene, which was a homopolymer, and maleic anhydride.

After spinning, the polypropylene composite fiber was mixed with a polyethylene terephthalate (PET) fiber (Daeyang Industrial, recycled PET Fiber, fineness of 25 deniers) in a ratio of 10:90.

After the mixing of the fibers, carding was performed using a carding machine and then non-woven fiber aggregates (non-woven fabric) were prepared through a needle punching process of the number of times of punching per minute of 500 times, a movement speed of the non-woven fiber aggregates of 2 m/min, and a punching density of 200 punches/cm².

The non-woven fiber aggregates were mounted on two unwinding devices and then the needle punching process of the number of times of punching per minute of 500 times, a movement speed of the non-woven fiber aggregates of 2 m/min, and a punching density of 200 punches/cm² was repeated to form physical re-bonding between the non-woven fiber aggregates.

The non-woven fiber aggregates bonded by the needle punching were introduced to a preheating chamber having a chamber temperature of 200°C and then preheated for 3 minutes.

Thereafter, the non-woven fiber aggregates were transferred to a heating roll press at a speed of 5 m/min. At this time, a heating temperature of the heating roll press was 200°C and a pressure was 150 kgf/cm², and a core layer (molded body) having the non-woven fiber aggregate structure was prepared by heating/pressing for 2 minutes.

### [Preparation Examples 2 to 8]

A core layer was prepared in the same manner as in Preparation Example 1, except that a polypropylene composite fiber and a polyethylene terephthalate fiber were mixed at different wt% as shown in Table 1 below.

### [Preparation Examples 9 to 11]

A core layer was prepared in the same manner as in Preparation Example 1, except that a polyethylene terephthalate (PET) fiber (Daeyang Industrial, recycled PET Fiber, fineness of 25 deniers) and a polypropylene fiber (GH new material, fineness of 15 deniers) were prepared and then mixed at wt% in Table 1 below.

### [Preparation Example 12]

A core layer was prepared in the same manner as in Preparation Example 1, except that a copolymer chip formed by grafting a polypropylene/polyethylene block copolymer (PP/PE block copolymer) and maleic anhydride was used instead of a maleic anhydride polypropylene chip.

**[Table 1]**

| | Polypropylene composite fiber | Polypropylene fiber | Polyethylene terephthalate fiber | Note |
|---|---|---|---|---|
| Preparation Example 1 | 10 | - | 90 | Before spinning polypropylene composite fiber, when preparing maleic anhydride |
| Preparation Example 2 | 20 | - | 80 | |
| Preparation Example 3 | 30 | - | 70 | |
| Preparation Example 4 | 40 | - | 60 | |
| Preparation Example 5 | 50 | - | 50 | |
| Preparation Example 6 | 60 | - | 40 | |
| Preparation Example 7 | 70 | - | 30 | |
| Preparation Example 8 | 80 | - | 20 | |
| Preparation Example 9 | - | 30 | 70 | - |
| Preparation Example 10 | - | 40 | 60 | - |
| Preparation Example 11 | - | 50 | 50 | - |
| Preparation Example 12 | 40 | - | 60 | Before spinning polypropylene composite fiber, when preparing maleic anhydride polyolefin, using PP/PE block copolymer |

| | | | | |
|---|---|---|---|---|
| (Unit: core material (molded body) wt% with respect to 100% of total weight) | | | | |

### Manufacture of sandwich panel: Examples 1 to 8 and Comparative Examples 1 to 4

### [Example 1]

After a polyolefin adhesive (Samsung Gratech) was applied on both sides of the core layer prepared in Preparation Example 1 at a thickness of 50 µm, a skin layer formed of galvanized iron (Posco Steel) was formed at a thickness of 0.4 mm, and then a laminated product was thermal-cured at 100°C to manufacture a sandwich panel.

### [Examples 2 to 8]

Sandwich panels were manufactured in the same manner as in Example 1, except that the core layers prepared in Preparation Examples 2 to 8 were used according to Table 2 below.

### [Comparative Examples 1 to 4]

Sandwich panels were manufactured in the same manner as in Example 1, except that the core layers prepared in Preparation Examples 9 to 12 were used according to Table 2 below.

**[Table 2]**

| | Used core layer |
|---|---|
| Example 1 | Preparation Example 1 |
| Example 2 | Preparation Example 2 |
| Example 3 | Preparation Example 3 |
| Example 4 | Preparation Example 4 |
| Example 5 | Preparation Example 5 |
| Example 6 | Preparation Example 6 |
| Example 7 | Preparation Example 7 |
| Example 8 | Preparation Example 8 |
| Comparative Example 1 | Preparation Example 9 |
| Comparative Example 2 | Preparation Example 10 |
| Comparative Example 3 | Preparation Example 11 |
| Comparative Example 4 | Preparation Example 12 |

### Experimental Example 1: Measurement of physical properties of molded body (core layer)

With respect to the molded bodies (corresponding to the core layers of the sandwich panels) prepared in Preparation Examples 1 to 12, flexural rigidity (GPa) and flexural strength (N) were measured according to ASTM C393, and the results were shown in Table 3 below.

**[Table 3]**

| | Flexural Rigidity (GPa) | Flexural Strength (N) |
|---|---|---|
| Preparation Example 1 | 0.27 | 31 |
| Preparation Example 2 | 0.41 | 48 |
| Preparation Example 3 | 0.70 | 93 |
| Preparation Example 4 | 0.84 | 111 |
| Preparation Example 5 | 0.95 | 129 |
| Preparation Example 6 | 0.83 | 103 |
| Preparation Example 7 | 0.67 | 85 |
| Preparation Example 8 | 0.62 | 69 |
| Preparation Example 9 | 0.65 | 77 |
| Preparation Example 10 | 0.71 | 102 |
| Preparation Example 11 | 0.84 | 116 |
| Preparation Example 12 | 0.73 | 105 |

Referring to Table 3, it could be seen that Preparation Examples 4 to 6, as molded bodies containing 40 to 60 wt% of polypropylene composite fibers with respect to 100% of the total weight of the molded body, had excellent mechanical properties of flexural rigidity of 0.75 GPa or more and flexural strength of 95 N or more. In particular, it could be seen that the molded body of Preparation Example 5, as a molded body containing 50 wt% of a polypropylene composite fiber with respect to 100% of the total weight of the molded body, had excellent mechanical properties of flexural rigidity of 0.85 GPa or more and flexural strength of 120 N or more.

On the other hand, as a result of comparing measurement values of flexural rigidity and flexural strength in 'Preparation Examples 3 and 9', 'Preparation Examples 4 and 10', and 'Preparation Examples 5 and 11', which were the molded bodies containing the same wt% of a polypropylene composite fiber or a polypropylene fiber with respect to the total weight of the molded body, it could be confirmed that when the polypropylene composite fiber was included, the mechanical properties of the molded bodies were better than those when the polypropylene fiber was included due to high compatibility with the polyethylene terephthalate (PET) fiber.

In addition, in a maleic anhydride polyolefin structure included in the polypropylene composite fiber included in the molded body, it could be seen that Preparation Example 4, in which a polymer grafted with maleic anhydride was a PP homopolymer, had better mechanical properties of flexural rigidity and flexural strength than Preparation Example 12 using a PP/PE block copolymer, even if the weight ratio of mixing with the polyethylene terephthalate (PET) fiber was the same. Through this, it could be seen that the flexural rigidity and flexural strength of the molded body were improved as the physical properties of a matrix were increased by copolymerizing polypropylene serving as a binder and a matrix as a homopolymer without additives.

### Experimental Example 2: Measurement of physical properties of sandwich panel

The thicknesses and weights of the sandwich panels manufactured in Examples 1 to 8 and Comparative Examples 1 to 4 were measured, and the results were shown in Table 4 below.

**[Table 4]**

| | Sandwich panel thickness (mm) | Sandwich panel weight (kg/m²) |
|---|---|---|
| Example 1 | 6.42 | 10.3 |
| Example 2 | 6.43 | 10.3 |
| Example 3 | 6.48 | 10.3 |
| Example 4 | 6.41 | 10.3 |
| Example 5 | 6.30 | 10.3 |
| Example 6 | 6.35 | 10.3 |
| Example 7 | 6.37 | 10.3 |
| Example 8 | 6.37 | 10.3 |
| Comparative Example 1 | 6.40 | 10.3 |
| Comparative Example 2 | 6.31 | 10.3 |
| Comparative Example 3 | 6.30 | 10.3 |
| Comparative Example 4 | 6.32 | 10.37 |

After the sandwich panels manufactured in Examples 1 to 8 and Comparative Examples 1 to 4 were prepared as specimens, flexural rigidity and flexural strength were measured according to ASTM C393, and the results were shown in Table 5 below.

**[Table 5]**

| | Flexural Rigidity (GPa) | Flexural Strength (N) |
|---|---|---|
| Example 1 | 15 | 740 |
| Example 2 | 21 | 1010 |
| Example 3 | 30 | 1580 |
| Example 4 | 38 | 2140 |
| Example 5 | 43 | 2600 |
| Example 6 | 35 | 1980 |
| Example 7 | 29 | 1550 |
| Example 8 | 27 | 1450 |
| Comparative Example 1 | 27 | 1350 |
| Comparative Example 2 | 32 | 1820 |
| Comparative Example 3 | 35 | 2320 |
| Comparative Example 4 | 34 | 1930 |

Referring to Table 5, it could be seen that Examples 4 to 6, as sandwich panels containing 40 to 60 wt% of polypropylene composite fibers with respect to 100% of the total weight of the core material, had excellent mechanical properties of flexural rigidity of 35 GPa or more and flexural strength of 1,900 N or more. In particular, Example 5 including 50 wt% of the polypropylene composite fiber had the best mechanical properties of flexural rigidity of 40 GPa or more and flexural strength of 2,500 N or more.

On the other hand, through comparison of results of measuring flexural rigidity and flexural strength in 'Example 3 and Comparative Example 1', 'Example 4 and Comparative Example 2', and 'Example 5 and Comparative Example 3', including the same wt% of the polypropylene composite fiber or the polypropylene fiber with respect to the total weight of the core material, it could be confirmed that when the polypropylene composite fiber was included, the mechanical properties of the sandwich panel were better than those when the polypropylene fiber was included due to high compatibility with the polyethylene terephthalate (PET) fiber. Even through comparison of FIGS. 2 and 3 showing SEM images of Example 4 and Comparative Example 2, it could be seen that the polypropylene composite fiber had better compatibility with the polyethylene terephthalate fiber than the polypropylene fiber.

In addition, in Example 4 of preparing maleic anhydride polyolefin by grafting the 'polypropylene homopolymer' with maleic anhydride, as compared with Comparative Example 4 of grafting a 'polypropylene/polyethylene block copolymer' instead of a homopolymer with maleic anhydride, it could be seen that since the molded body prepared by copolymerizing polypropylene serving as a binder and a matrix as a homopolymer without additives was included as a core material, mechanical properties in flexural rigidity and flexural strength of the sandwich panel were excellent.

Simple modification and change of the present invention all belong to the scope of the present invention and a detailed protection scope of the present invention will be clear by the appended claims.

### [Explanation of Reference Numerals and Symbols]

10: Core layer
20: Skin layer

## Claims

1. A molded body having a non-woven fiber aggregate structure comprising two or more non-woven fiber aggregates, comprising:
a polyester-based fiber and a polypropylene composite fiber,
wherein the polypropylene composite fiber comprises polypropylene; and maleic anhydride polyolefin,
wherein the maleic anhydride polyolefin is grafted with polyolefin and maleic anhydride; and
wherein the polyolefin is polypropylene having a homopolymer structure.

2. The molded body of claim 1, wherein the non-woven fiber aggregate structure comprises,
with respect to the total weight of the polyester-based fiber and the polypropylene composite fiber,
35 to 75 wt%, preferably 35 to 65 wt% of the polyester-based fiber and
25 to 65 wt%, preferably 35 to 65 wt% of the polypropylene composite fiber.

3. The molded body of claim 1, wherein the polyester-based fiber is at least one selected from the group consisting of polyethylene terephthalate (PET), polytrimethylene terephthalate, polybutylene terephthalate and polyethylene naphthalate.

4. The molded body of claim 1, wherein the non-woven fiber aggregate structure is a structure in which two or more non-woven fiber aggregates are bonded, and
the non-woven fiber aggregates are formed by bonding non-woven fibers on a web or sheet with an adhesive or using a thermoplastic fiber.

5. The molded body of claim 1, wherein the flexural rigidity of the molded body is 0.55 to 1.05 GPa, wherein the flexural rigidity is measured according to ASTM C393.

6. The molded body of claim 1, wherein the flexural strength of the molded body is 60 to 135 N, wherein the flexural strength is measured according to ASTM C393.

7. A sandwich panel comprising:
a core layer;
a skin layer laminated on at least one surface of the core layer; and
a bonding layer bonding the core layer and the skin layer,
wherein the core layer uses the molded body of claim 1.

8. The sandwich panel of claim 7, wherein the flexural rigidity of the sandwich panel is 30 to 50 GPa, wherein the flexural rigidity is measured according to ASTM C393.

9. The sandwich panel of claim 7, wherein the flexural strength of the sandwich panel is 1500 to 3000 N, wherein the flexural strength is measured according to ASTM C393.

10. The sandwich panel of claim 7, wherein the skin layer is at least one selected from the group consisting of aluminum, iron, stainless steel (SUS), magnesium, electro-galvanized iron (EGI) and galvanized iron (GI).

11. The sandwich panel of claim 7, wherein the bonding layer includes at least one of an olefin-based adhesive, a urethane-based adhesive, an acrylic adhesive, and an epoxy-based adhesive.

12. A method for manufacturing a sandwich panel according to any of claims 7 to 11 comprising steps of:
a) preparing non-woven fiber aggregates by mixing a polyester-based fiber and a polypropylene composite fiber;
b) preparing a core layer by performing a needle-punching process for the non-woven fiber aggregates at the number of times of punching per minute of 300 to 1000 times, a movement speed of 1 to 8 m/min, and a punching density of 100 to 500 punches/cm²;
c) forming a bonding layer on at least one surface of the core layer; and
d) forming a skin layer on the bonding layer.

## Patentansprüche

1. Formkörper mit einer Vliesfaseraggregatstruktur, umfassend zwei oder mehr Vliesfaseraggregate, umfassend:
eine Faser auf Basis von Polyester und eine Polypropylenverbundfaser,
wobei die Polypropylenverbundfaser Polypropylen umfasst; und Maleinsäureanhydrid-Polyolefin,
wobei das Maleinsäureanhydrid-Polyolefin mit Polyolefin und Maleinsäureanhydrid gepfropft ist; und
wobei das Polyolefin Polypropylen mit einer Homopolymerstruktur ist.

2. Formkörper nach Anspruch 1, bei dem die Vliesfaseraggregatstruktur umfasst,
bezogen auf das Gesamtgewicht der Faser auf Basis von Polyester und der Polypropylenverbundfaser,
35 bis 75 Gew.-%, vorzugsweise 35 bis 65 Gew.-% der Faser auf Basis von Polyester und
25 bis 65 Gew.-%, vorzugsweise 35 bis 65 Gew.-% der Polypropylenverbundfaser.

3. Formkörper nach Anspruch 1, bei dem die Faser auf Basis von Polyester mindestens eine ausgewählt aus der Gruppe bestehend aus Polyethylenterephthalat (PET), Polytrimethylenterephthalat, Polybutylenterephthalat und Polyethylennaphthalat ist.

4. Formkörper nach Anspruch 1, bei dem die Vliesfaseraggregatstruktur eine Struktur ist, in der zwei oder mehr Vliesfaseraggregate verbunden sind, und
die Vliesfaseraggregate durch Verbinden von Vliesfasern auf einer Bahn oder Lage mit einem Klebstoff oder unter Verwendung einer thermoplastischen Faser gebildet sind.

5. Formkörper nach Anspruch 1, bei dem die Biegesteifigkeit des Formkörpers 0,55 bis 1,05 GPa beträgt, wobei die Biegesteifigkeit gemäß ASTM C393 gemessen wird.

6. Formkörper nach Anspruch 1, bei dem die Biegefestigkeit des Formkörpers 60 bis 135 N beträgt, wobei die Biegefestigkeit gemäß ASTM C393 gemessen wird.

7. Sandwichplatte, umfassend:
eine Kernschicht;
eine Hautschicht, die auf mindestens eine Oberfläche der Kernschicht laminiert ist; und
eine Verbindungsschicht, die die Kernschicht und die Hautschicht verbindet,
wobei die Kernschicht den Formkörper nach Anspruch 1 verwendet.

8. Sandwichplatte nach Anspruch 7, bei dem die Biegesteifigkeit der Sandwichplatte 30 bis 50 GPa beträgt, wobei die Biegesteifigkeit gemäß ASTM C393 gemessen wird.

9. Sandwichplatte nach Anspruch 7, bei dem die Biegefestigkeit der Sandwichplatte 1500 bis 3000 N beträgt, wobei die Biegefestigkeit gemäß ASTM C393 gemessen wird.

10. Sandwichplatte nach Anspruch 7, bei dem die Hautschicht mindestens eine ausgewählt aus der Gruppe bestehend aus Aluminium, Eisen, Edelstahl (SUS), Magnesium, elektroverzinktem Eisen (EGI) und verzinktem Eisen (GI) ist.

11. Sandwichplatte nach Anspruch 7, bei dem die Verbindungsschicht mindestens einen ausgewählt aus der Gruppe bestehend aus einem Klebstoff auf Basis von Olefin, einem Klebstoff auf Basis von Urethan, einem Acrylklebstoff und einem Klebstoff auf Basis von Epoxid enthält.

12. Verfahren zur Herstellung einer Sandwichplatte nach einem der Ansprüche 7 bis 11, umfassend die Schritte:
a) Herstellen von Vliesfaseraggregaten durch Mischen einer Faser auf Basis von Polyester und einer Polypropylenverbundfaser;
b) Herstellen einer Kernschicht durch Durchführen eines Nadelstanzprozesses für die Vliesfaseraggregate mit der Anzahl von Malen des Stanzens pro Minute von 300 bis 1000 Mal, einer Bewegungsgeschwindigkeit von 1 bis 8 m/min und einer Stanzdichte von 100 bis 500 Stanzen/cm² ;
c) Bilden einer Verbindungsschicht auf mindestens einer Oberfläche der Kernschicht; und
d) Bilden einer Hautschicht auf der Verbindungsschicht.

## Revendications

1. Corps moulé ayant une structure d'agrégats de fibres non tissées comprenant deux agrégats de fibres non tissées ou plus, comprenant :
une fibre à base de polyester et une fibre composite de polypropylène,
dans lequel la fibre composite de polypropylène comprend un polypropylène ; et une polyoléfine d'anhydride maléique,
dans lequel la polyoléfine d'anhydride maléique est greffée avec une polyoléfine et un anhydride maléique ; et
dans lequel la polyoléfine est un polypropylène ayant une structure homopolymère.

2. Corps moulé selon la revendication 1, dans lequel la structure d'agrégats de fibres non tissées comprend,
pour le poids total de la fibre à base de polyester et de la fibre composite de polypropylène,
35 à 75 % en poids, de préférence 35 à 65 % en poids de la fibre à base de polyester et
25 à 65 % en poids, de préférence 35 à 65 % en poids de la fibre composite de polypropylène.

3. Corps moulé selon la revendication 1, dans lequel la fibre à base de polyester est un ou plusieurs éléments sélectionnés dans le groupe constitué de téréphtalate de polyéthylène (PET), téréphtalate de polytriméthylène, téréphtalate de polybutylène et naphtalate de polyéthylène.

4. Corps moulé selon la revendication 1, dans lequel la structure d'agrégats de fibres non tissées est une structure dans laquelle deux agrégats de fibres non tissées ou plus sont liés, et
les agrégats de fibres non tissées sont formés en liant des fibres non tissées sur une bande ou une feuille avec un adhésif ou en utilisant une fibre thermoplastique.

5. Corps moulé selon la revendication 1, dans lequel la rigidité à la flexion du corps moulé est 0,55 à 1,05 GPa, dans lequel la rigidité à la flexion est mesurée selon ASTM C393.

6. Corps moulé selon la revendication 1, dans lequel la résistance à la flexion du corps moulé est 60 à 135 N, dans lequel la résistance à la flexion est mesurée selon ASTM C393.

7. Panneau sandwich comprenant :
une couche centrale ;
une couche de peau stratifiée sur au moins une surface de la couche centrale ; et
une couche de liaison liant la couche centrale et la couche de peau,
dans lequel la couche centrale utilise le corps moulé selon la revendication 1.

8. Panneau sandwich selon la revendication 7, dans lequel la rigidité à la flexion du panneau sandwich est 30 à 50 GPa, dans lequel la rigidité à la flexion est mesurée selon ASTM C393.

9. Panneau sandwich selon la revendication 7, dans lequel la résistance à la flexion du panneau sandwich est 1500 à 3000 N, dans lequel la résistance à la flexion est mesurée selon ASTM C393.

10. Panneau sandwich selon la revendication 7, dans lequel la couche de peau est un ou plusieurs éléments sélectionnés dans le groupe constitué d'aluminium, fer, acier inoxydable (SUS), magnésium, fer électro-galvanisé (EGI) et fer galvanisé (GI).

11. Panneau sandwich selon la revendication 7, dans lequel la couche de liaison inclut au moins un adhésif parmi un adhésif à base d'oléfine, un adhésif à base d'uréthane, un adhésif acrylique et un adhésif à base d'époxy.

12. Procédé de fabrication d'un panneau sandwich selon l'un quelconque des revendications 7 à 11 comprenant les étapes consistant à :
a) préparer des agrégats de fibres non tissées en mélangeant une fibre à base de polyester et une fibre composite de polypropylène ;
b) préparer une couche centrale en effectuant un processus de perforation avec une aiguille pour les agrégats de fibres non tissées à raison d'un nombre de perforations par minute de 300 à 1000 fois, une vitesse de déplacement de 1 à 8 m/min et une densité de perforation de 100 à 500 perforations/cm² ;
c) former une couche de liaison sur au moins une surface de la couche centrale ; et
d) former une couche de peau sur la couche de liaison.
